**Europäisches Patentamt**

**European Patent Office**

**Office européen des brevets**

(19)

(11) Veröffentlichungsnummer: **0 367 089 B1**

## EUROPÄISCHE PATENTSCHRIFT

(12)

(45) Veröffentlichungstag der Patentschrift: **05.10.94**

(21) Anmeldenummer: **89119805.3**

(22) Anmeldetag: **25.10.89**

(51) Int. Cl.⁵: **C08F 279/02**, //(C08F279/02, 212:06,226:06)

(54) **Schlagfeste thermoplastische Formmassen und deren Verwendung.**

(30) Priorität: **03.11.88 DE 3837310**

(43) Veröffentlichungstag der Anmeldung:
**09.05.90 Patentblatt 90/19**

(45) Bekanntmachung des Hinweises auf die Patenterteilung:
**05.10.94 Patentblatt 94/40**

(84) Benannte Vertragsstaaten:
**BE DE ES FR GB IT NL**

(56) Entgegenhaltungen:
**GB-A- 778 102**

(73) Patentinhaber: **BASF Aktiengesellschaft
Carl-Bosch-Strasse 38
D-67063 Ludwigshafen (DE)**

(72) Erfinder: **Schulte, Konrad, Dr.
Keltenstrasse 30
D-6707 Schifferstadt (DE)**
Erfinder: **Büschl, Rainer, Dr.
Hollandstrasse 14
D-6701 Roedersheim-Gronau (DE)**
Erfinder: **Klaerner, Peter, Dr.
Hauptstrasse 62
D-6719 Battenberg (DE)**

**Beschreibung**

Die Erfindung betrifft eine schlagfeste, spannungsrißbeständige thermoplastische Formmasse, die enthält, jeweils bezogen auf die Summe aus A und B

80 bis 55 Gew.% einer Hartmatrix aus einem Copolymeren A von mindestens einem vinylaromatischen Monomeren $a_{11}$ mit 8 bis 10 C-Atomen und mindestens einem Comonomeren $a_{12}$

und

45 bis 20 Gew.% einer gleichmäßig in der Hartmatrix verteilten Weichphase B, die einen mittleren Teilchendurchmesser $d_{50}$ (Volumenmittel) von 3,5 bis 9 $\mu$m aufweist,

wie sie erhalten wird durch Polymerisation einer Mischung der Monomeren $a_{11}$ und $a_{12}$ in Gegenwart eines Elastomeren unter anschließender Gewinnung des Wertproduktes.

Zum Stand der Technik werden genannt:

(1) DE-AS 25 25 019    (6) GB-A-778,102

(2) DE-OS 31 00 785

(3) EP-A1 00 29 174

(4) EP-A1 02 50 836 und

(5) DE-OS 37 02 037

Es ist bekannt, daß zur Herstellung von Kühlschrankinnenbehältern schlagfestes Polystyrol mit guter Beständigkeit gegenüber Spannungsrißkorrosion verwendet werden muß. Aus (1) sind Formmassen bekannt, die sich für diesen Zweck eignen, deren Hartmatrix ausschließlich aus Polystyrol aufgebaut ist.

Aus (2) und (3) sind ebenfalls spannungsrißbeständige Formmassen bekannt, die in der Hartmatrix bis zu 12 Gew.% eines Comonomeren, z.B. ein ethylenisch ungesättigtes Nitril, ein Acryl- oder Methacrylsäurederivat enthalten. Auch diese Formmassen sind aufgrund ihrer Spannungsrißbeständigkeit für den Kühlmöbelsektor geeignet.

In (4) ist ein Verfahren zur Herstellung einer thermoplastischen 2-phasigen Formmasse in Gegenwart eines ionischen Vernetzers beschrieben, deren Hartmatrix als Comonomer eine Säure enthält.

Weiterhin ist bekannt, daß Kühlschrankinnenbehälter bei der Montage des Kühlschrankes mit Polyurethan (PU) hinterschäumt werden.

Nachteilig an den Formmassen gemäß (1) ist, daß sie nicht an dem PU-Schaum haften, weshalb sich dieser schon beim Einwirken geringer Kräfte ablöst. Dadurch wird die Stabilität der gesamten Konstruktion nachteilig beeinflußt und die angestrebte Isolierwirkung leidet.

Die Formmassen gemäß (2) und (3) besitzen zwar eine ausreichende Haftung an Polyurethanschaum; nachteilig ist jedoch, daß die Formmassen große Mengen an polaren Comonomeren enthalten, so daß sich das Fließverhalten der Polymerschmelze verschlechtert und die Verarbeitbarkeit erheblich erschwert oder sogar in Frage gestellt wird. Durch Absenken des Molekulargewichts kann diesem Effekt zwar entgegengesteuert werden, jedoch ist dem Fachmann bekannt, daß darunter üblicherweise die mechanische Eigenschaften, z.B. die Schlagzähigkeit leiden.

Weiterhin nachteilig ist, daß bei der in (2) vorgeschlagenen Lösung Acrylnitril gehandhabt werden muß, was im Störfall zu Gefährdungen führen kann.

In (5) wird gelehrt, daß durch Copolymerisation vinylaromatischer Monomerer mit geringen Mengen von Monomeren mit freien Carboxylgruppen, wie Itaconsäure, Fumarsäure, Acrylsäure oder Methacrylsäure Produkte mit hervorragender Schaumhaftung zugänglich sind.

Aus (6) ist die Herstellung von Klebstoffen bekannt, die u.a. ein Styrol-Vinylpyridincopolymerisat enthalten können. (6) kann jedoch keine Lehre der Art entnommen werden, daß thermoplastische Formmassen, die eine ganz geringe Menge, z.B. von Vinylpyridin enthalten, eine im Sinne der nachstehenden Aufgabe günstige Wirkung enthalten.

Es liegt allerdings in der sauren Natur dieser Comonomeren, daß sie in Produktionsanlagen, die nicht aus Edelstahl hergestellt sind, die verwendeten Leitungs- und Kesselmaterialien angreifen.

Aufgabe der Erfindung ist es daher, geeignete Comonomere zu finden, die, wie die bekannten Comonomeren, die Schaumhaftung von schlagfesten Spannungsbeständigen Formmassen verbessern, ohne die in üblichen Produktionsanlagen verwendeten Materialien anzugreifen.

Diese Aufgabe wird gelöst durch eine schlagfeste und zugleich Spannungsrißbeständige, an Polyurethanschäumen haftende thermoplastische Formmasse der eingangs genannten Art, die als Comonomeres eine vinylsubstituierte heterocyclische Verbindung einpolymerisiert enthält, die mindestens ein keine Vinylgruppe tragendes N-Atom aufweist.

Die erfindungsgemäße Formmasse ist 2-phasig aufgebaut und besteht im wesentlichen aus einer Hartmatrix A und eine Weichphase B. Während oder nach der Herstellung der Formmassen können übliche Zusatzstoffe zugesetzt werden.

Die Formmasse enthält folgende Anteile, bezogen auf A + B:
A: 80 bis 55 Gew.%, vorzugsweise 75 bis 55 Gew.%,
B: 20 bis 45 Gew.%, vorzugsweise 25 bis 45 Gew.%.

Bezogen auf 100 Gew.-Teile A + B können Zusatzstoffe in einer Menge von bis 25 Gew.-Teilen, vorzugsweise 1 bis 20 Gew.-Teilen, bezogen auf die fertige Masse zugegen sein.

Komponente A

Die Komponente A der erfindungsgmäßen Formmasse ist aus einem Copolymerisat von mindestens einem vinylaromatischen Monomeren $a_{11}$ mit 8 bis 10 C-Atomen und mindestens einem - insbesondere dem erfindungsgemäßen Comonomeren $a_{12}$ aufgebaut.

Bezogen auf die Summe aus A und B sind 97,5 bis 99,9 Gew.-% des vinylaromatischen Monomeren $a_{11}$ und 0,1 bis 2,5 Gew.-% des Comonomeren $a_{12}$ im Copolymerisat (Hartmatrix) einpolymerisiert.

Die Viskositätszahl der Hartmatrix soll 60 bis 90 ml/g (0,5-%ige Lösung in Toluol bei 23°C) und insbesondere 65 bis 80 ml/g betragen.

Als monovinylaroamtische Monomere $a_{11}$ mit 8 bis 10 C-Atomen kommen dabei insbesondere das Styrol, ferner die kern- oder seitenkettalkylierten Styrole, wie $\alpha$-Methylstyrol und p-Methylstyrol in Betracht. Vorzugsweise wird jedoch ausschließlich Styrol verwendet.

Als Comonomere $a_{12}$ werden Vinylverbindungen mit einem heterocyclischen Ringsystem verwendet, wobei das heterocyclische Ringsystem mindestens ein nicht direkt an die Vinylgruppe gebundenes N-Atom enthält.

Soweit die erfindungsgemäßen Vinylverbindungen weniger als 2,5 Gew.% im Sinne der betreffenden Mengenangaben ausmachen, können weitere Comonomere mitverwendet sein, z.B. Acrylester.

Komponente B

Die erfindungsgemäße Formmasse weist als Komponente B eine Weichphase auf, die fein dispergiert in der Hartmatrix vorhanden ist. Gegenwart der Weichphase kann z.B. durch eine elektronenmikroskopische Aufnahme der Formmasse nachgewiesen werden. Der Anteil der Weichphase wird durch Bestimmung des Gelgehalts ermittelt. Bei der Weichphase handelt es sich um ein Pfropfmischpolymerisat der Monomeren $a_{11}$ und $a_{12}$ der Hartmatrix (also eines Copolymerisates) auf ein Elastomeres (Kautschuk) als Pfropfgrundlage. Die Herstellung und Dispergierung einer derartigen Weichphase ist bekannt.

Als Elastomeres (Kautschuk) werden die üblicherweise für die Schlagfestmodifizierung von Styrolpolymerisaten gebräuchlichen natürlichen und synthetischen Kautschuke eingesetzt. Im Sinne der Erfindung geeignet sind Polybutadiene, Polyisoprene und Mischpolymerisate des Butadiens und/oder des Isoprens mit Styrol, die eine Glastemperatur unterhalb von -20°C besitzen.

Die Mischpolymerisate des Butadiens oder des Isoprens mit Styrol können die Monomeren sowohl in statistischer Verteilung als auch blockförmig eingebaut erhalten. Besonders bevorzugt sind Polybutadiene mit 30 bis 99 % cis-1,4-Einheiten.

Bei der Herstellung der Weichphase B wird das Elastomere in einer Menge von 4 bis 12 Gew.-%, vorzugsweise von 6 bis 12 Gew.-%, bezogen auf die Mischung der Monomeren $a_{11}$ + $a_{12}$ (den Reaktionsansatz) angewendet, wobei im Bedarfsfall ein Lösungsmittel und Hilfsstoffe, wie Regler, Gleitmittel etc. mitverwendet werden.

Das mittlere Molekulargewicht der Elastomeren liegt im Bereich von 50.000 bis 400.000, insbesondere von 200 000 bis 300 000 (Gew.-Mittel). Die Teilchen der Weichphase bestehen aus Zellenteilchen, die einen mittleren Teilchendurchmesser, $d_{50}$-Wert (Volumenmittel aus Bildanalyse) von 3,5 bis 9 $\mu$m, vorzugsweise von 4 bis 6 $\mu$m aufweisen. Das in der Weichphase occludierte und gepfropfte Copolymerisat aus $a_{11}$ und $a_{12}$ wird dieser zugerechnet.

Komponente C

Zusätzlich zu den Komponenten A und B kann die erfindungsgemäße Formmasse eine Komponente C, also Zusatzstoffe enthalten. Die Komponente C kann schon bei der Herstellung der Formmasse zugesetzt oder aber später in die Formmasse eingemischt werden.

Unter Zusatzstoffen werden z.B. die für die Herstellung von Formmassen üblichen Hilfsmitteln, wie Mineralöle, übliche Ester von aromatischen oder aliphatischen Carbonsäuren mit aliphatischen Alkoholen, Polyalkylenoxide auf Basis von Ethylenoxid und/oder Propylenoxid, Molekulargewichtsregler, Schutzkolloide oder Antioxidantien verstanden.

3

Als Hilfsmittel seien ferner genannt Gleitmittel, wie Zinkstearat, Farbstoffe, Stabilisatoren, evtl. Flammschutzmittel in üblichen Mengen.

Die erfindungsgemäße Formmasse soll folgende Eigenschaften aufweisen, die teils durch die Hartmatrix, teils durch die Weichphase oder durch die Herstellung bedingt sind:

1. Der Quellungsindex der Weichphase soll im Bereich von 9 bis 13 liegen.

2. Der Gelgehalt soll im Bereich von 25 bis 35 liegen.

3. Die Viskositätszahl (VZ)der Hartmatrix soll 60 bis 90 ml/g betragen.

4. Der mittlere Teilchendurchmesser ($d_{50}$-Wert; Volumenmittel durch Bildanalyse) liegt im Bereich von 3,5 bis 9 $\mu$m, vorzugsweise von 4 bis 6 $\mu$m.

5. Die Schlagzähigkeit soll 5 bis 25 (Nm) betragen.

6. Die Reißfestigkeit soll 5 bis 15 % oberhalb der zugehörigen Streckgrenze liegen.

Vergleiche Methoden zur Bestimmung der Parameter 1 bis 6 auch in (1) bis (4), soweit in diesen Unterlagen nicht ausführlich dargestellt.

Herstellung der erfindungsgemäßen Formmasse

Die Herstellung der erfindungsgemäßen Formmassen erfolgt durch Polymerisation des Monomerengemisches $a_{11}$ und $a_{12}$ in Gegenwart des Kautschuks, wobei der Kautschuk zunächst in der Monomerenmischung gelöst und diese Ausgangslösung dann unter Rühren polymerisiert wird. Bei einer solchen Polymerisation spricht man von einer Masse-Polymerisation.

Dem Reaktionsgemisch kann bis zu 50 Gew.-%, bezogen auf die Monomerenmischung, eines indifferenten Lösungsmittels zugegeben werden. Geeignet sind hierfür beispielsweise aromatische Kohlenwasserstoffe wie Toluol, Ethylbenzol oder die Xylole. Bei einer solchen Polymerisation spricht man von einer Lösungspolymerisation.

Die dritte Möglichkeit ist die Polymerisation zunächst in Masse und dann in wäßriger Suspension. Hierzu wird die Lösung des Kautschuks in den Monomeren bis zu einem Umsatz von ca. 35 % in Masse unter Rühren vorpolymerisiert, dann in Wasser suspendiert und anschließend auspolymerisiert.

In allen Fällen wird in der Regel in einem Temperaturbereich von 50 bis 200°C, vorzugsweise 80 bis 200°C polymerisiert. Der Polymerisationsstart kann entweder thermisch oder durch Zugabe öllöslicher, in Radikale zerfallender Initiatoren, wie Peroxiden oder Azo-Verbindungen ausgelöst werden.

Die Polymerisation kann kontinuierlich oder absatzweise durchgeführt werden.

Das kontinuierliche Verfahren ist z.B. in der DE-A-17 70 392, das absatzweise in der DE-A-26 13 352 hinreichend beschrieben.

Wenn die Masse ganz durchpolymerisiert ist, dann ist eine Hartmatrix aus dem Copolymerisat mit einer darin eingelagerten Weichphase entstanden.

Unter Weichphase (Gelgehalt) wird hier der bei Raumtemperatur (23°C) in Toluol unlösliche Anteil des schlagfest modifizierten Polymerisats abzüglich etwaiger Pigmente verstanden. Diese Weichphase ist heterogen aufgebaut und wird während des Herstellungsprozesses gebildet. Ihre Menge und ihr Zerteilungsgrad wird durch die Verfahrensbedingungen beeinflußt.

Die zu polymerisierende Kautschuklösung trennt sich kurz nach Beginn der Polymerisation in zwei Phasen, von denen zunächst die Lösung des Kautschuks in der Monomerenmischung die Kohärente bildet, während die zweite, eine Lösung des Copolymerisats in den Monomeren, in der ersten in Tröpfchen suspendiert bleibt. Bei steigendem Umsatz vermehrt sich die Menge der zweiten Phase auf Kosten der ersten und unter Monomerenverbrauch; dabei tritt dann ein Wechsel der Phasenkohärenz auf, bei dem sich Tropfen der Kautschuklösung in der Copolymerisation ausbilden, die ihrerseits kleinere Tropfen der jetzt äußeren Phase fest eingeschlossen enthalten.

Neben diesem Vorgang läuft eine Pfropfreaktion ab, bei der chemische Verknüpfungen zwischen den Kautschukmolekülen und dem Copolymerisat unter Bildung von Pfropf-Copolymeren aus beiden Bestandteilen gebildet werden. Dieser Vorgang ist bekannt und z.B. bei Fischer, Angew. Makromol. Chem. 33, S. 35 - 74 (1973), ausführlich beschrieben.

Die in den Beispielen und Vergleichsversuchen beschriebenen Paramter wurden wie folgt bestimmt:

1. Die Viskositätszahl, VZ der Hartmatrix in [ml/g] wird entsprechend der Vorschrift in DIN 53 724 bestimmt (0,5 %ige Lösung in Toluol bei 23°C).

2. Als Maß für die Schlagzähigkeit wird die 50 %ige Schädigungsarbeit, $W_{50}$ [Nm] aus einem Fallbolzenversuch gemäß DIN 53 443 bei T = 23°C an bei T = 280°C spritzgegossenen Testkästchen angegeben.

3. Von den Produkten der Beispiele und von Vergleichsproben wurden in bekannter Weise elektronenmikroskopische Dünnschichtaufnahmen angefertigt, die zur Bestimmung der Teilchengröße und Verteilung der Weichphase dienten.

Die Bestimmung geschieht mit Hilfe der Bildanalyse nach dem Verfahren, wie es von W. Alex in Zeitschrift für Aufbereitung und Verfahrenstechnik 13, (1972) im Kap. 3.11 beschrieben. Die Zahl der ausgewerteten Teilchen lag zwischen 1500 und 6500.

Bei der Angabe der mittleren Teilchengröße handelt es sich in allen Fällen um das Volumenmittel der Teilchengröße. Die Bildanalyse liefert die integrale Volumenverteilung des Teilchendurchmesser einer Probe.

Hieraus läßt sich entnehmen, wieviel Volumenprozent der Teilchen einen Durchmesser gleich oder kleiner einer bestimmten Größe haben. Der mittlere Teilchendurchmesser der auch als $d_{50}$-Wert der integralen Volumenverteilung bezeichnet wird, ist dabei als der Teilchendurchmesser definiert, bei dem 50 Vol.-% der Teilchen einen größeren Durchmesser aufweisen als dem $d_{50}$-Wert entspricht. Zur Charakterisierung der Teilchengrößenverteilung der Kautschukteilchen werden neben dem $d_{50}$-Wert (mittleren Teilchendurchmesser) die sich ebenfalls aus der integralen Volumenverteilung ergebenden $d_{10}$- bzw. $d_{90}$-Werte herangezogen. Der $d_{10}$- bzw. $d_{90}$-Wert der integralen Volumenverteilung ist dabei entsprechend dem $d_{50}$-Wert definiert mit dem Unterschied, daß sie auf 10 bzw. 90 Vol.-% der Teilchen bezogen sind.

4. Die Beständigkeit gegen Spannungsrißkorrosion unter dem Einfluß von Fett (a) wurde geprüft nach DIN 53 449 mit einem Testmedium aus Olivenöl/Ölsäure 1 : 1 bei 23°C. Gepreßte Normkleinstäbe (200°C) wurden 23 h in diesem Testmedium gelagert. Anschließend wurde in einem Zugversuch die Reißdehnung (%) als Funktion des Kugelübermaßes bestimmt.

Zum Vergleich wurden Normkleinstäbe, die 24 h an Luft belassen wurden, geprüft. Als Maß für die Spannungsrißbeständigkeit werden die relative und die absolute Restreißdehnung angegeben. Die relative Restreißdehnung wird definiert als

$$\text{relative Restreißdehnung} = \frac{\text{Reißdehnung (Olivenöl/Ölsäure)}}{\text{Reißdehnung (Luft)}} \times 100$$

Es werden diejenigen Produkte als spannungsrißbeständig im Sinne der vorliegenden Erfindung eingestuft, die eine relative Restreißdehnung von mehr als 30 % und eine absolute Restreißdehnung von mehr als 10 % besitzen.

Weiter wurde die Beständigkeit gegen niedrigsiedende Halogenkohlenwasserstoffe (b) bestimmt: Nach einer entsprechenden einstündigen Lagerung von gepreßten Normkleinstäben in einer Frigen-11-Atomosphäre wurde wie bei (a) beschrieben getestet. Hierbei werden die Produkte als spannungsrißbeständig im Sinne der vorliegenden Erfindung eingestuft, die eine relative Restreißdehnung von mehr als 75 % und eine absolute Restreißdehnung von mehr als 10 % besitzen.

5. Die Haftung an Polyurethanschäumen wurde in folgendem Test ermittelt: Gepreßte Rundscheiben von 6 cm Durchmesser wurden auf eine Unterlage gebracht und mit einer kommerziell erhältlichen aufschäumenden Polyurethan-Mischung (Sprühdose) übergossen. Nach 24 h wurden die Preßplättchen manuell vom Schaum abgezogen. Die Einstufung "gute Schaumhaftung" erfolgt, wenn dabei der Schaum reißt und die Einstufung "schlechte Schaumhaftung" bei einer Trennung an der Grenzfläche von schlagfestem Polystyrol/Polyurethanschaum.

6. Die Fließfähigkeit wurde in Form des Meltindex bei 200°C und einer Belastung von 5 kp in (g/10 Min) (DIN 53 735) gemessen.

Zur Durchführung der Beispiele und für Vergleichszwecke wurde als Kautschuk (elastomere Pfropfgrundlage) ein Handelsprodukt, ®Buna HX 529 C der Firma Bayer AG, verwendet. Es handelt sich nach Angaben des Herstellers um ein Homopolybutadien mit einem mittleren Molekulargewicht von 295 000 (Gewichtsmittel) und einem Gehalt von 37 % an cis-Struktureinheiten.

Die in den nachfolgenden Beispielen und Vergleichsversuchen angegebenen Mengen in Prozenten beziehen sich auf das Gewicht.

Beispiel 1

In einen mit einem Ankerrührer ausgestatteten Kessel mit einem Fassungsvermögen von 5 Litern werden 1775 g Styrol, 160 g Polybutadien (Buna HX 529 C) 10 g 4-Vinylpyridin, 2,4 g eines sterisch gehinderten Phenols als Stabilisator (Irganox®, 1076 von Ciba-Geigy) und 2,0 g t-Dodecylmercaptan gegeben. Nachdem sich das Polybutadien vollständig gelöst hat, wird isotherm bei 123°C und 75 Rührerumdrehungen/Minute bis zu einem Umsatz von 35 %, bezogen auf die Monomeren polymerisiert. Danach wird in wäßriger Suspension weiterpolymerisiert. Hierzu werden 1,7 g Dicumylperoxid sowie 2000 ml $H_2O$, 20 g eines Suspensionshilfsmittels auf Basis Ethylenoxid (Luviskol® K 90 der BASF Aktiengesellschaft) und 2,0 g Natriumpyrophosphat zugegeben. In Suspension wird bei 300 Rührerumdrehungen pro Minute 6 h isotherm bei 130°C und 6 h isothnerm bei 140°C bis zu einem Umsatz von mehr als 99 %, bezogen auf die Monomeren, polymerisiert.

Der Gehalt an 4-Vinylpyridin im Endprodukt wurde elementaranalystisch bestimmt. Es wurde ein Wert von 0,4 Gew.-%, bezogen auf die Formmasse aus Hartmatrix und Weichphase, gefunden. Die VZ der Hartmatrix wurde zu 71,4 bestimmt. Der $d_{50}$-Wert betrug 6,0 $\mu$m, der $d_{90}$-$d_{10}$-Wert 6,9 $\mu$m.

Beispiele 2 bis 4 und Vergleichsversuche I bis III

Die Versuche zu den Beispielen 2 bis 4 und die Vergleichsversuche I - III wurden entsprechend Beispiel 1 durchgeführt. Neben 4-Vinylpyridin wurde auch 1-Vinylimidazol als Comonomer in unterschiedlichen Mengen eingesetzt, so daß die in der Tabelle 1 genannten Gehalte im Endprodukt, bezogen auf A + B erzielt wurden. In die Tabelle 1 sind die Viskositätszahl der Matrix, der Gehalt an Weichphase (Gelgehalt), der mittlere Teilchendurchmesser ($d_{50}$) und die Teilchenverteilung ($d_{90}$-$d_{10}$) aufgenommen worden.

Tabelle 1

| Beispiel | Comonomer | | Weichphase | VZ | $d_{50}$ | $d_{90}$ - $d_{10}$ |
|---|---|---|---|---|---|---|
| | Art | Menge | | | | |
| 1 | 4-Vinylpyridin | 0,4 % | 34 % | 74 | 6,0 | 6,9 |
| 2 | 4-Vinylpyridin | 1,6 % | 34 % | 73,6 | 6,5 | 7,9 |
| 3 | 1-Vinylimidazol | 0,8 % | 32 % | 72,8 | 6,2 | 7,3 |
| 4 | 1-Vinylimidazol | 1,8 % | 33 % | 73,5 | 6,6 | 8,0 |
| Vergleichsversuche | | | | | | |
| I | - | - | 33 | 73,8 | 5,9 | 6,8 |
| II | 4-Vinylpyridin | 0,05 | 33 | 73,7 | 5,9 | 6,9 |
| III | 1-Vinylimidazol | 0,06 | 34 | 72,8 | 6,2 | 7,3 |

Tabelle 2

| Beispiel | Spannungsrißkorrosion (Restreißdehung) | | | | Polyurethan-Schaumhaftung | MFI (g/10') |
|---|---|---|---|---|---|---|
| | Ölivenöl/Ölsäure | | Frigen | | | |
| | absolut | relativ | absolut | relativ | | |
| 1 | 18 | 41 | 38 | 92 | gut | 4,7 |
| 2 | 17 | 39 | 36 | 91 | gut | 4,6 |
| 3 | 19 | 39 | 40 | 94 | gut | 4,7 |
| 4 | 16 | 37 | 37 | 91 | gut | 4,4 |
| Vergleichsversuche | | | | | | |
| I | 18 | 39 | 39 | 91 | schlecht | 4,7 |
| II | 16 | 38 | 41 | 92 | schlecht | 4,8 |
| III | 19 | 40 | 36 | 89 | schlecht | 4,6 |

Aus Tabelle 2 kann man entnehmen, daß die erfindungsmäßige Formmasse bei guter Spannungsrißbeständigkeit auch eine gute Schaumhaftung bewirkt. Die Fließfähigkeit wurde nicht verschlechtert. Die Vergleichsversuche zeigen, daß kein oder ein nur geringer Zusatz (0,1 %) des Comonomeren 4-Vinylpyridin und 1-Vinylimidazol keine ausreichende Haftung auf Polyurethanschaum bewirken.

**Patentansprüche**

1. Schlagfeste thermoplastische Formmasse, enthaltend, jeweils bezogen auf A + B,

   80 bis 55 Gew.-% einer Hartmatrix aus einem Copolymeren A von mindestens einem vinylaromatischen Monomeren $a_{11}$ mit 8 bis 10 C-Atomen und mindestens einem weiteren Comonomeren $a_{12}$ und

   45 bis 20 Gew.% einer gleichmäßig in der Hartmatrix verteilten Weichphase B, die einen mittleren Teilchendurchmesser $d_{50}$ (Volumenmittel) von 3,5 bis 9 $\mu$m aufweist,

   wie sie erhalten wird durch Polymerisation einer Mischung der Monomeren $a_{11}$ und $a_{12}$ in Gegenwart eines Elastomeren unter anschließender Gewinnung des Wertproduktes,

   dadurch gekennzeichnet, daß als Comonomeres $a_{12}$ 0.1 bis 2,5 Gew.%, bezogen auf die Summe aus A und B, einer vinylsubstituierten heterocyclischen Verbindung mit mindestens einem keine Vinylgruppe tragenden N-Atom ein polymerisiert ist.

2. Schlagfeste thermoplastische Formmasse nach Anspruch 1, enthaltend außerdem übliche Zusatzstoffe in üblichen Mengen.

3. Formmassen nach Anspruch 1, dadurch gekennzeichnet, daß als Comonomeres $a_{12}$ 4-Vinylpyridin verwendet wird.

4. Formmasse nach Anspruch 1, dadurch gekennzeichnet, daß als Comonomeres $a_{12}$ 1-Vinylimidazol verwendet wird.

5. Formmasse nach Anspruch 1, dadurch gekennzeichnet, daß sie aufweist

   75 bis 55 Gew.-% Hartmatrix A und
   45 bis 25 Gew.-% Weichphase B.

6. Formmasse nach Anspruch 1, wie sie erhalten wird durch Polymerisation einer Mischung der Monomeren $a_{11}$ und $a_{12}$ in Gegenwart von, bezogen auf $a_{11}$ und $a_{12}$, 6 bis 12 Gew.-% Polybutadien.

7. Verwendung einer Formmasse nach Anspruch 1 zur Herstellung von Formteilen.

**Claims**

1. An impact-resistant thermoplastic molding material, containing, based on A + B,

   from 80 to 55% by weight of a hard matrix of a copolymer A of one or more vinylaromatic monomers $a_{11}$ of 8 to 10 carbon atoms and one or more further comonomers $a_{12}$ and

   from 45 to 20% by weight of a soft phase B which is uniformly distributed in the hard matrix and has a median particle diameter $d_{50}$ (volume average) of from 3.5 to 9 $\mu$m,

   as obtained by polymerization of a mixture of the monomers $a_{11}$ and $a_{12}$ in the presence of an elastomer with subsequent isolation of the desired product,

   wherein from 0.1 to 2.5% by weight, based on the sum of A and B, of a vinyl-substituted heterocyclic compound having one or more N atoms which do not carry a vinyl group is polymerized as comonomer $a_{12}$.

2. An impact-resistant thermoplastic molding material as claimed in claim 1, furthermore containing conventional additives in the usual amounts.

3. A molding material as claimed in claim 1, wherein 4-vinylpyridine is used as comonomer $a_{12}$.

4. A molding material as claimed in claim 1, wherein 1-vinylimidazole is used as comonomer $a_{12}$.

5. A molding material as claimed in claim 1, containing

   from 75 to 55% by weight of hard matrix A and
   from 45 to 25% by weight of soft phase B.

6. A molding material as claimed in claim 1, as obtained by polymerization of a mixture of the monomers $a_{11}$ and $a_{12}$ in the presence of from 6 to 12% by weight, based on $a_{11}$ and $a_{12}$, of polybutadiene.

7. The use of a molding material as claimed in claim 1 for the production of moldings.

**Revendications**

1. Masse de moulage thermoplastique résistant aux chocs contenant, chaque fois rapportés à A + B,

de 80 à 55% en poids d'une matrice dure constituée par un copolymère A d'au moins un monomère vinylaromatique $a_{11}$ contenant de 8 à 10 atomes de carbone et d'au moins un autre comonomère $a_{12}$

et

de 45 à 20% en poids d'une phase molle B distribuée uniformément dans la matrice dure, qui présente une granulométrie moyenne $d_{50}$ (moyenne en volume) de 3,5 à 9 $\mu$m,

telle qu'on l'obtient par polymérisation d'un mélange des monomères $a_{11}$ et $a_{12}$ en présence d'un élastomère avec récupération ultérieure du produit valable,

caractérisée en ce que, comme comonomère $a_{12}$, est introduit par polymérisation, de 0,1 à 2,5% en poids, rapportés à la somme de A et de B, un composé hétérocyclique substitué par un groupe vinyle contenant au moins un atome de N ne portant pas de groupe vinyle.

2. Masse de moulage thermoplastique résistant aux chocs selon la revendication 1, contenant, en outre, des additifs habituels dans les quantités habituelles.

3. Masses de moulage selon la revendication 1, caractérisées en ce que, comme comonomère $a_{12}$, on utilise la 4-vinylpyridine.

4. Masse de moulage selon la revendication 1, caractérisée en ce que, comme comonomère $a_{12}$, on utilise le 1-vinylimidazole.

5. Masse de moulage selon la revendication 1, caractérisée en ce qu'elle présente

de 75 à 55% en poids de matrice dure A et

de 45 à 25% en poids de phase molle B.

6. Masse de moulage selon la revendication 1, telle qu'on l'obtient par polymérisation d'un mélange des monomères $a_{11}$ et $a_{12}$ en présence de 6 à 12% en poids de polybutadiène, rapportés à $a_{11}$ et à $a_{12}$.

7. Utilisation d'une masse de moulage selon la revendication 1, pour la fabrication d'éléments moulés.